Europäisches Patentamt

European Patent Office

Office européen des brevets

(19)

(11) EP 0 832 016 B1

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(21) Anmeldenummer: 96922011.0

(22) Anmeldetag: 18.06.1996

(51) Int. Cl.$^6$: **B60T 8/00**

(86) Internationale Anmeldenummer:
**PCT/EP96/02623**

(87) Internationale Veröffentlichungsnummer:
**WO 97/00798 (09.01.1997 Gazette 1997/03)**

(54) **VERFAHREN ZUR KURVENFAHRTERKENNUNG FÜR EIN BLOCKIERSCHUTZ-REGELUNGSSYSTEM**

METHOD OF DETECTING CORNERING FOR AN ANTILOCK REGULATION SYSTEM

PROCEDE DE DETECTION DE VIRAGES POUR SYSTEME DE REGLAGE ANTIBLOCAGE

(84) Benannte Vertragsstaaten:
**DE FR GB**

(30) Priorität: 22.06.1995 DE 19522634

(43) Veröffentlichungstag der Anmeldung:
**01.04.1998 Patentblatt 1998/14**

(73) Patentinhaber:
**Continental Teves AG & Co. oHG**
**60488 Frankfurt (DE)**

(72) Erfinder: **BATISTIC, Ivica**
**D-60385 Frankfurt am Main (DE)**

(56) Entgegenhaltungen:
EP-A- 0 293 561        DE-A- 4 141 875
DE-A- 4 230 481

**Beschreibung**

Die Erfindung bezieht sich auf ein Verfahren zur Kurvenfahrterkennung, das für ein Blockierschutzregelungssystem vorgesehen ist, bei dem das Drehverhalten der Fahrzeugräder mit Hilfe von Radsensoren gemessen und zur Bestimmung einer Fahrzeugreferenzgeschwindigkeit, die als Bezugsgröße zur Ermittlung des Radschlupfes und zur Bremsdruckmodulation dient, ausgewertet wird, und bei dem aus dem Radschlupf Kriterien für die Kurvenfahrterkennung und Richtung der Kurvenfahrt abgeleitet werden.

Aus der DE 34 13 738 C2 (P 5547) ist bereits eine Schaltungsanordnung für eine blockiergeschützte Bremsanlage bekannt, mit der zur Kurvenfahrterkennung die Schlupfwerte an den Rädern einer Fahrzeugseite addiert, mit der Schlupfsumme der Räder auf der anderen Fahrzeugseite verglichen und das Kurvenfahrterkennungssignal erzeugt wird, sobald die Differenz der Schlupfsummen beider Fahrzeugseiten einen vorgegebenen Grenzwert überschreitet. Es handelt sich um eine Bremsanlage, bei der der Bremsdruckverlauf in einzelnen Bremsdruckregelkanälen nach vorgegebenen Auswahlkriterien, wie "select-low" oder "select-high", verknüpft ist. Bei Kurvenfahrterkennung werden diese Auswahlkriterien und vorgegebene Grenzwerte, die ebenfalls die Regelung beeinflussen, geändert.

Bei einem in der DE 21 19 590 A1 beschriebenen Antiblockiersystem wird ein Kurvenfahrterkennungssignal mit Hilfe eines Querbeschleunigungs-Meßgerätes, z.B. eines Quecksilberschalters, gewonnen.

Des weiteren ist es aus der DE 19 65 391 A1 bekannt, bei einem Antiblockierregelsystem die Schlupfwerte der einzelnen Räder zu ermitteln und zur Regelung des Bremsdruckes heranzuziehen.

Das Erkennen einer Kurvenfahrt und die Anpassung einer Blockierschutzregelung an die unterschiedlichen Bedingungen während einer Geradeaus- und während einer Kurvenfahrt bereiten Schwierigkeiten. Werden die Regelungsinformationen, wie bei einem ABS üblich, ausschließlich oder vornehmlich mit Hilfe von Radsensoren gewonnen, muß der durch eine Kurvenfahrt hervorgerufene Radschlupf von dem durch Blockiertendenzen hervorgerufenen oder Regelungs-bedingten Schlupf unterschieden werden. Grundsätzlich wäre es wünschenswert, eine Information über Geradeaus- oder Kurvenfahrt in die Regelung einbeziehen zu können. Aus Kostengründen wird jedoch im allgemeinen auf die Verwendung eines Lenkwinkelsensors, Querbeschleunigungssensors oder dergl., der diese Information liefern könnte, verzichtet. Bei noch komplexeren Regelungssystemen, z.B. bei Fahrstabilitätsregelungen (FSR,ASMS) ist man dagegen gezwungen, den höheren Aufwand für solche Sensoren aufzubringen.

Der Erfindung liegt nun die Aufgabe zugrunde, auf einfache Weise und ohne zusätzliche Sensoren, d.h. lediglich auf Basis der von den Radsensoren gelieferten Informationen, eine präzise Kurvenerkennung zu erreichen.

Es hat sich gezeigt, daß diese Aufgabe durch das im Anspruch 1 beschriebene Verfahren zu lösen ist, dessen Besonderheit darin besteht, daß die Radschlupfsignale gefiltert und die gefilterten Signale miteinander verglichen werden sowie daß "Kurvenfahrt" erkannt wird, wenn gleichzeitig der gefilterte Radschlupf an beiden Vorderrädern über einem vorgegebenem, von der momentanen Fahrzeuggeschwindgkeit oder Fahrzeugreferenzgeschwindigkeit abhängigen, Vorderrad-bezogenen Schlupf-Maximalwert und der gefilterte Radschlupf eines Hinterrades über und der gefilterte Radschlupf des anderen Hinterrades unter einem vorgegebenen, von der Fahrzeugreferenzgeschwindigkeit abhängigen, Hinterrad-bezogenen Schlupf-Maximalwert bzw. unter einem vorgegebenen, von der Fahrzeug(referenz)geschwindigkeit abhängigen Schlupf-Minimalwert liegen, wobei zur Bestimmung der Kurvenfahrtrichtung das den niedrigeren Schlupfwert bzw. die höhere Geschwindigkeit aufweisende Hinterrad als das kurvenäußere Hinterrad gewertet wird.

Bei Verwendung der heute üblichen programmgesteuerten Schaltungen, wie von Microcomputern und dergl., und von Schaltungen oder Programmschritten mit Tiefpaß-Charakteristik wird vorteilhafterweise das gefilterte Radschlupfsignal nach der Beziehung

$$fws_{neu} = fws_{alt} + (fws_{alt} - fws_{neu}) / T$$

gebildet, wobei mit '$fws_{neu}$' der im Arbeitstakt zuletzt ermittelte, mit '$fws_{alt}$' der im Arbeitstakt zuvor ermittelte gefilterte Radschlupf und mit 'T' eine vorgegebene Zeitkonstante, die in einer Größenordnung zwischen 30 und 200 ms, insbesondere zwischen 50 und 100 ms, liegt, bezeichnet sind.

Eine zuverlässige Unterscheidung in Geradeaus- und Kurvenfahrt ist insbesondere auch bei den relativ preiswerten Antiblockiersystemen mit nur 2 hydraulisch voneinander unabhängigen Regelkanälen oder mit der sogen. 2 1/2-Kanalkonfiguration, bei der durch je ein zusätzliches 2/2-Wegeventil die Bremsdruckregelung in den beiden Regelkanälen erweitert ist, von Bedeutung. Bei solchen 2- oder 2 1/2-Kanal-Systemen ist es besonders wichtig, bei Kurvenerkennung die Regelung diesen besonderen Bedingungen anzupassen.

Die Erfindung nutzt die Erkenntnis, daß die Vorderräder bei einer Kurvenfahrt einen schräglaufabhängigen Schlupf aufweisen. Dieser Schlupf nimmt mit zunehmendem Schräglaufwinkel zu.

Das kurveninnere Hinterrad beschreibt in der Kurve einen kleineren Kurvenradius als das kurvenäußere Hinterrad. Folglich ist das kurvenäußere Hinterrad das Rad mit der höchsten Drehgeschwindigkeit und bestimmt weitgehend die Fahrzeug-Referenzgeschwindigkeit. Je mehr sich die Fahrzeuggeschwindigkeit der Kurvengrenzgeschwindigkeit annähert, um so ausgeprägter und eindeutiger wird diese Tendenz. Dieses typische Verhalten wird erfindungsgemäß zur Erkennung der Kurvenfahrt ausgewertet.

Eine weitere vorteilhafte Ausführungsart des erfindungsgemäßen Verfahrens besteht darin, daß für den Vorderrad-bezogenen Schlupf-Maximalwert ein Wert in der Größenordnung zwischen 3 und 10% der Fahrzeug(referenz)geschwindigkeit, für den Hinterrad-bezogenen Schlupf-Maximalwert ein Wert in der Größenordnung zwischen 2 und 5% der Fahrzeug(referenz)geschwindigkeit und für den Hinterrad-bezogenen Schlupf-Minimalwert ein Wert in der Größenordnung zwischen 0,5 und 2% der Fahrzeug(referenz)geschwindigkeit vorgegeben werden.

Weitere Merkmale, Vorteile und Anwendungsmöglichkeiten gehen aus der folgenden Beschreibung anhand der beigefügten Darstellung eines Ausführungsbeispiels der Erfindung hervor. Diese Abbildung zeigt in schematischer Darstellungsweise, nämlich als Blockschaltbild eine Schaltungsanordnung zur Durchführung des erfindungsgemäßen Verfahrens.

Die dargestellte Schaltungsanordnung gehört zu einem Antiblockiersystem. Mit Hilfe von Radsensoren S1 bis S4 werden in bekannter Weise Signale erzeugt, die das Drehverhalten der einzelnen Fahrzeugräder wiedergeben. Im allgemeinen werden heute induktive Meßwertaufnehmer oder aktive Radsensoren verwendet. Als Signalgeber sind z.B. die symbolisch dargestellten Zahnscheiben 1 bis 4 geeignet, die sich mit den Fahrzeugrädern drehen und die in den Radsensoren S1 bis S4 ein der Drehbewegung und der Zähnezahl entsprechendes Wechselsignal hervorrufen.

In einer Signalaufbereitungsschaltung 5 wird aus den Sensorsignalen ein aufbereitetes, der Radgeschwindigkeit entsprechendes Geschwindigkeitssignal $v_1$ bis $v_4$ erzeugt.

Durch logische Verknüpfung der Geschwindigkeitssignale $v_1$ bis $v_4$ wird in einem Schaltkreis 6 eine Fahrzeugreferenzgeschwindigkeit $V_{Ref}$ gebildet, die u.a. als Bezugsgröße zur Ermittlung des Radschlupfes $\lambda_1$ bis $\lambda_4$ der einzelnen Fahrzeugräder dient; hierzu wird nach der Beziehung

$$\lambda_i = V_{Ref} - v_i$$

$$(i = 1....4)$$

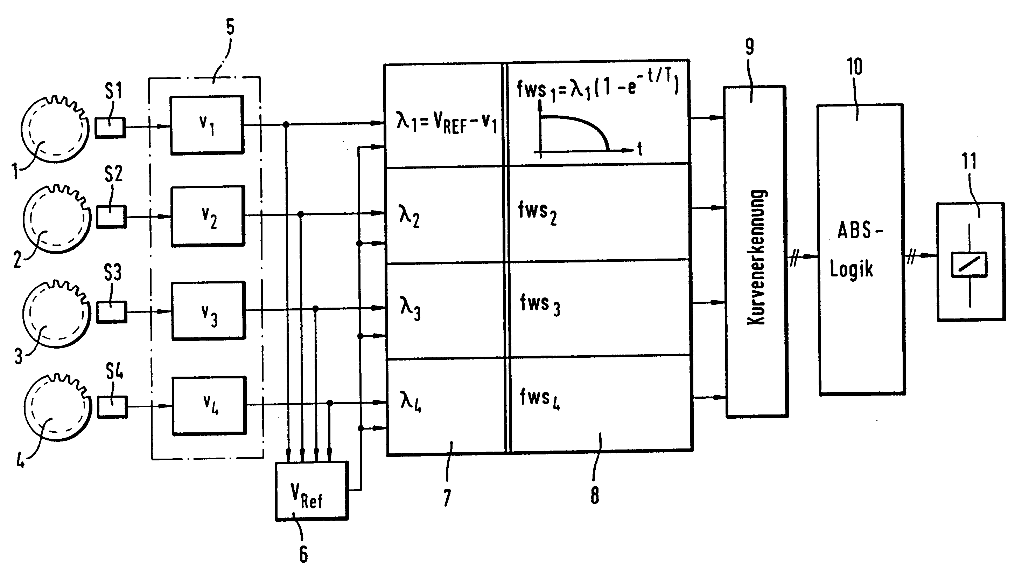

jeweils die Differenz zwischen der Fahrzeugreferenzgeschwindigkeit $V_{Ref}$ und der jeweiligen Radgeschwindigkeit $v_i$ gebildet. Die einzelnen Schaltkreise zur Gewinnung der Radschlupfsignale $\lambda_1$ bis $\lambda_4$ sind in der Abbildung zu einem Schaltblock 7 symbolisch zusammengefaßt.

Die Radschlupfsignale $\lambda_1$ bis $\lambda_4$ werden in einem Schaltkreis 8, der ein Filter mit Tiefpaß-Charakteristik darstellt, verarbeitet. Es gilt allgemein für ein Rad i die Beziehung

$$fws_i = \lambda_i (1 - e^{-t/T})$$

oder, wenn es sich um einen Microcomputer und digitale Filterungstechnik handelt, individuell für jedes Rad die Beziehung

$$fws_{neu} = fws_{alt} + (fws_{alt} - fws_{neu}) / T.$$

'fws' bezeichnet hier das gefilterte Radschlupfsignal. 'T' ist die Filterzeitkonstante, die beispielsweise in der Größenordnung zwischen 30 und 200 ms liegen kann; in einem Ausführungsbeispiel galt 'T' = 70 ms.

Die gefilterten Radschlupfwerte fws werden sodann in einer Kurvenerkennungsschaltung 9 analysiert. "Kurvenfahrt" liegt vor, wenn gleichzeitig folgende Bedingungen erfüllt sind:

$$(fws_1 \& fws_2) > S_{max\,VA}$$

$$fws_{3(4)} > S_{max\,HA}$$

$$fws_{4(3)} < S_{min\,HA}$$

Die Indizes 1 und 2 bezeichnen die Vorderräder, 3 und 4 die Hinterräder. Der Vergleich der Hinterrad-Schlupfwerte läßt erkennen, welches Hinterrad (das Hinterrad mit dem größeren Schlupfwert) das kurvenäußere Rad ist.

Die Schlupfschwellen $S_{max\,VA}$, $S_{max\,Ha}$, $S_{min\,HA}$ sind abhängig von der Fahrzeug(referenz)geschwindigkeit. In einem Ausführungsbeispiel der Erfindung wurden die Schlupfschwellen wie folgt definiert

$$S_{max\,VA} = (3\%.....10\%)\ V_{Ref}; \text{ insbesondere } 5\%\ V_{Ref}$$

$$S_{max\,HA} = (2\%.....5\%)\ V_{Ref}; \text{ insbesondere } 3\%\ V_{Ref}$$

$$S_{min\,HA} = (0,5\%... 2\%)\, V_{Ref};\ \text{insbesondere } 1\%\ V_{Ref}.$$

Ein gleichzeitiges Überschreiten der vorgenannten drei Schwellwerte führt zur sicheren Erkennen einer Kurvenfahrt, wobei durch Vergleich der Hinterrad-Schlupfwerte die Kurvenrichtung erkennbar ist.

Erfindungsgemäß wird also durch die beschriebene logische Verknüpfung und Auswertung der Raddrehzahl- bzw. Radschlupfinformationen aller Fahrzeugräder eine zuverlässige und genaue Unterscheidung in Geradeaus- und Kurvenfahrt ermöglicht. Auf Basis dieser Information läßt sich dann die Regelung entscheidend verbessern.

Die vorgenannte Abhängigkeit der Schlupfschwellen von der Fahrzeug(referenz)geschwindigkeit gilt vorzugsweise nur in einem bestimmten Bereich oder nur oberhalb einer Mindest-Fahrzeug(referenz)geschwindigkeit. Erforderlichenfalls ist eine Änderung der Schlupf-Prozentualwerte in Abhängigkeit von der Fahrzuggeschwindigkeit möglich.

In dem dargestellten Ausführungsbeispiel werden die Ausgangssignale der Kurvenerkennungsschaltung 9 einer ABS-Regelungslogik 10 zugeführt, in der die eigentliche Bestimmung oder Errechnung von Bremsdruckmodulationssignalen in Abhängigkeit von dem Drehverhalten der einzelnen Fahrzeugräder erfolgt; zusätzlich werden im vorliegenden Fall die von der Kurvenerkennungsschaltung gelieferten Informationen bei der Blockierschutzregelung berücksichtigt.

Die Ausgangssignale der Regelungslogik werden einem Ventilblock 11 zugeführt, der die verschiedenen Bremsdruckregelventile oder Aktuatoren eines Blockierschutzregelungssystems symbolisiert. Bei einer blockiergeschützten hydraulischen Bremsanlage werden beispielsweise zur Blockierschutzregelung den einzelnen Radbremsen Ventilpaare (Einlaß- und Auslaßventile) zugeordnet.

Das erfindungsgemäße Verfahren zur Kurvenfahrterkennung und die beschriebene Schaltungsanordnung, die vorzugsweise für ein Blockierschutzregelungssystem vorgesehen sind, sind auch für eine Antriebsschlupfregelung und andere Regelungssysteme, bei denen eine Unterscheidung in Geradeausfahrt- und Kurvenfahrt erwünscht ist, geeignet.

**Patentansprüche**

1.  Verfahren zur Kurvenfahrterkennung, für ein Blockierschutzregelungssystem, bei dem das Drehverhalten der Fahrzeugräder mit Hilfe von Radsensoren gemessen und zur Bestimmung einer Fahrzeugreferenzgeschwindigkeit, die als Bezugsgröße zur Ermittlung des Radschlupfes und zur Bremsdruckmodulation dient, ausgewertet wird, und bei dem aus dem Radschlupf Kriterien für die Kurvenfahrterkennung und Richtung der Kurvenfahrt abgeleitet werden, dadurch **gekennzeichnet**, daß die Radschlupfsignale ($\lambda_{1...}\lambda_4$) gefiltert und die gefilterten Signale ($fws_1...fws_4$) miteinander verglichen werden sowie daß "Kurvenfahrt" erkannt wird, wenn gleichzeitig der gefilterte Radschlupf ($fws_1, fws_2$) an beiden Vorderrädern über einem vorgegebenem, von der momentanen Fahrzeuggeschwindigkeit oder Fahrzeugreferenzgeschwindigkeit abhängigen, Vorderrad bezogenen Schlupf-Maximalwert ($S_{max\,VA}$) und der gefilterte Radschlupf eines Hinterrades über und der gefilterte Radschlupf des anderen Hinterrades unter einem vorgegebenen, von der Fahrzeuggeschwindigkeit bzw. Fahrzeugreferenzgeschwindigkeit ($V_{Ref}$) abhängigen, Hinterrad-bezogenen Schlupf-Maximalwert ($S_{max\,HA}$) bzw. unter einem vorgegebenen, von der Fahrgeschwindigkeit bzw. Fahrzeugreferenzgeschwindigkeit abhängigen, Hinterrad-bezogenen Schlupf-Minimalwert ($S_{min\,HA}$) liegen, wobei zur Bestimmung der Kurvenfahrtrichtung das den niedrigeren Schlupfwert bzw. die höhere Geschwindigkeit aufweisende Hinterrad als das kurvenäußere Hinterrad gewertet wird.

2.  Verfahren nach Anspruch 1, dadurch **gekennzeichnet**, daß bei Verwendung von programmgesteuerten Schaltungen, wie Microprozessoren, Microcomputern, Microcontrollern etc., und Filtern mit Tiefpaß-Charakteristik die gefilterten Radschlupfsignale nach der Beziehung

$$fws_{neu} = fws_{alt} + (fws_{alt} - fws_{neu})\,/\,T$$

gebildet werden, wobei mit '$fws_{neu}$' der im Arbeitstakt zuletzt ermittelte, mit '$fws_{alt}$' der im Arbeitstakt zuvor ermittelte gefilterte Radschlupf und mit 'T' eine vorgegebene Zeitkonstante, die in einer Größenordnung zwischen 30 und 200 ms, insbesondere zwischen 50 und 100 ms, liegt, bezeichnet sind.

3.  Verfahren nach Anspruch 1 oder 2, dadurch **gekennzeichnet**, daß für den Vorderrad-bezogenen Schlupfmaximalwert ($S_{max\,VA}$) ein Wert in der Größenordnung zwischen 3 und 10% der Fahrzeuggeschwindigkeit bzw. Fahrzeugreferenzgeschwindigkeit ($V_{Ref}$), für den Hinterrad-bezogenen Schlupfmaximalwert ($S_{max\,HA}$) ein Wert in der Größenordnung zwischen 2 und 5% der Fahrzeuggeschwindigkeit bzw. Fahrzeugreferenzgeschwindigkeit ($V_{Ref}$) und für den Hinterrad-bezogenen Schlupf-Minimalwert ($S_{min\,HA}$) ein Wert in der Größenordnung zwischen 0,5 und 2% der Fahrzeuggeschwindigkeit bzw. Fahrzeugreferenzgeschwindigkeit ($V_{Ref}$) vorgegeben werden.

**Claims**

1.  Method of cornering identification for an anti-lock control system wherein the rotational behavior of the vehicle wheels is measured by wheel sensors and evaluated to determine a vehicle reference speed which is used as a reference value for ascertaining the wheel slip and for braking pressure modulation, and wherein criteria for cornering identification and the direction of cornering are derived from the wheel slip,
**characterized** in that the wheel slip signals ($\lambda_1...\lambda_4$) are filtered and the filtered signals ($fws_1...fws_4$) are compared, and in that "cornering" is identified when simultaneously the filtered wheel slip ($fws_1$, $fws_2$) on the two front wheels is in excess of a predetermined front-wheel-related maximum slip value ($S_{max\ VA}$) that is responsive to the instantaneous vehicle speed or vehicle reference speed, and the filtered wheel slip of one rear wheel is above and the filtered wheel slip of the other rear wheel is below a predetermined rear-wheel-related maximum slip value ($S_{max\ HA}$) that is responsive to the vehicle speed or vehicle reference speed ($V_{Ref}$) or below a predetermined rear-wheel-related minimum slip value ($S_{min\ HA}$) that is responsive to the vehicle speed or vehicle reference speed, and the rear wheel having the lower slip value or the higher speed is assessed as the curve-outward rear wheel to determine the direction of cornering.

2.  Method as claimed in claim 1,
**characterized** in that when programmed circuits, such as microprocessors, microcomputers, microcontrollers, etc., and filters having a low-pass filter characteristic are used, the filtered wheel slip signals are produced according to the relation

$$fws_{neu} = fws_{alt} + (fws_{alt} - fws_{neu}) / T$$

and '$fws_{neu}$' refers to the filtered wheel slip which was the last one ascertained in the working cycle and '$fws_{alt}$' refers to the previously ascertained filtered wheel slip, and 'T' implies a predetermined time constant which ranges in the order between 30 and 200 msec, more particularly between 50 and 100 msec.

3.  Method as claimed in claim 1 or claim 2,
**characterized** in that a value in the order between 3 and 10 % of the vehicle speed or vehicle reference speed ($V_{Ref}$) is predetermined for the front-wheel-related maximum slip value ($S_{max\ VA}$), a value in the order between 2 and 5 % of the vehicle speed or vehicle reference speed ($V_{Ref}$) is predetermined for the rear-wheel-related maximum slip value ($S_{max\ HA}$), and a value in the order between 0.5 and 2 % of the vehicle speed or vehicle reference speed ($V_{Ref}$) is predetermined for the rear-wheel-related minimum slip value ($S_{min\ HA}$).

**Revendications**

1.  Procédé de reconnaissance d'un virage pour un système de régulation antiblocage des roues, où le comportement de rotation des roues du véhicule est mesuré au moyen de capteurs de roues et est analysé en vue de déterminer une vitesse de référence du véhicule, qui sert de grandeur de référence pour la détermination du glissement des roues et pour la modulation de la pression de freinage, et où on dérive, à partir du glissement des roues, des critères pour la reconnaissance d'un virage et de la direction du virage,
caractérisé en ce que les signaux ($\lambda_1 ... \lambda_4$) de glissement des roues sont filtrés, et que les signaux filtrés ($fws_1 ... fws_4$) sont comparés les uns aux autres, et en ce que le "passage dans un virage" est reconnu lorsque, en même temps, le glissement de roue filtré ($fws_1$, $fws_2$) des deux roues avant est situé au-dessus d'une valeur maximale prédéterminée ($S_{max\ av\ ext}$) dépendant de la vitesse momentanée du véhicule ou de la vitesse de référence du véhicule, liée aux roues avant, alors que le glissement de roue filtré d'une roue arrière se situe au-dessus, et le glissement de roue filtré de l'autre roue arrière se situe en dessous, d'une valeur maximale prédéterminée ($S_{max\ ar\ ext}$) de glissement de roue, dépendant de la vitesse du véhicule ou de la vitesse de référence ($V_{réf}$) du véhicule, liée aux roues arrière, et en dessous d'une valeur minimale prédéterminée ($S_{min\ ar\ ext}$) dépendant de la vitesse du véhicule ou de la vitesse de référence du véhicule, liée aux roues arrière, et où, pour déterminer la direction du virage, on désigne comme roue arrière extérieure dans le virage, la roue arrière qui présente la valeur de glissement la plus faible ou la vitesse la plus élevée.

2.  Procédé selon la revendication 1, caractérisé en ce que le procédé est mis en oeuvre au moyen de circuits programmés tels que des microprocesseurs, des micro-ordinateurs, des microcommandes etc., et de filtres à caractéristiques passe-bas, en formant les signaux filtrés de glissement de roues d'après la relation

$$fws_{nouveau} = fws_{ant.} + (fws_{ant.} - fws_{nouveau}) / T,$$

où ' fws$_{nouveau}$' désigne le dernier glissement de roue filtré défini dans le cycle, 'fws$_{ant.}$' désigne le glissement de roue filtré précédent défini dans le cycle, et 'T' désigne une constante de temps prédéfinie qui est de l'ordre de 30 à 200 ms, notamment de l'ordre de 50 à 100 ms.

3. Procédé selon la revendication 1 ou 2, caractérisé en ce que l'on prédéfinit, pour la valeur maximale de glissement liée aux roues avant (S$_{max\ av\ ext}$), une valeur de l'ordre de 3 à 10 % de la vitesse du véhicule ou de la vitesse de référence du véhicule (V$_{réf}$), pour la valeur maximale de glissement liée aux roues arrière (S$_{max\ ar\ ext}$), une valeur de l'ordre de 2 à 5 % de la vitesse du véhicule ou de la vitesse de référence du véhicule (V$_{réf}$), et pour la valeur minimale de glissement liée aux roues arrière (S$_{min\ ar\ ext}$), une valeur de l'ordre de 0,5 à 2 % de la vitesse du véhicule ou de la vitesse de référence du véhicule (V$_{réf}$).